# EUROPÄISCHE PATENTSCHRIFT

(11) **EP 1 475 406 B1**
(45) Veröffentlichungstag und Bekanntmachung des Hinweises auf die Patenterteilung: **11.03.2009**
(21) Anmeldenummer: 04009693.5
(22) Anmeldetag: 23.04.2004
(51) Int. Cl.: C08K 5/00, B32B 1/08

(54) **Leitung, insbesondere für Tankeinfüllsysteme**
hose, particularly for fuel intake
conduite, particulièrement pour le remplissage de carburant

(30) Priorität: 05.05.2003 DE 10320224
(43) Veröffentlichungstag der Anmeldung: 10.11.2004
(73) Patentinhaber: VERITAS AG, 63571 Gelnhausen (DE)
(72) Erfinder: Van Hooren, Marc, 63579 Bernbach (DE); Seyler, Andreas, 63584 Gründau (DE); Zülch, Wilfried, 63571 Gelnhausen (DE)
(74) Vertreter: Grünecker, Kinkeldey, Stockmair & Schwanhäusser Anwaltssozietät

(56) Entgegenhaltungen:
- US-A- 4 606 952
- US-A- 5 404 915
- US-A- 5 588 469
- US-A- 6 037 062

## Beschreibung

Die Erfindung bezieht sich auf eine Leitung, insbesondere für Tankeinfüllsysteme, mit einer Sperrschicht und einer Deckschicht.

Aufgrund gesetzlicher Vorgaben (EU-Altautorichtlinie) dürfen in absehbarer Zukunft nur noch bleifreie Tankeinfüllsysteme angeboten werden. Deshalb werden bereits bleifreie mehrlagige Kraftstoffleitungen hergestellt, die einen permeationshemmenden Inliner als Sperrschicht und eine diese Sperrschicht umgebende Deckschicht aufweisen. Durch die Sperrschicht wird eine unerwünschte Permeation des in der Leitung befindlichen Kraftstoffes verhindert. Als Materialien mit besonders guter Sperrwirkung werden insbesondere Fluor-Thermoplaste, aber auch Kunststoffe auf Polyamidbasis eingesetzt. Als Deckschicht werden Materialien auf Kautschukbasis, wie beispielsweise Epichlorohydrin-Kautschuk eingesetzt, die gegen Umwelteinflüsse und Wärme besonders beständig sind.

Da Fluor-Thermoplaste sehr schlechte Adhäsionseigenschaften aufweisen, ist es schwierig, eine kraftschlüssige und mechanisch belastbare Verbindung zwischen der Sperrschicht und der Deckschicht herzustellen. Eine bisher praktizierte Lösung dieses Problems ist die Verwendung eines Klebstoffes, bzw. einer Oberflächenbehandlung (Plasma etc.) zwischen der Sperrschicht und der Deckschicht. Dadurch wird allerdings die Fertigung der Kraftstoffleitung erschwert.

Zur Vermeidung des Klebstoffes wird in der US-6,037,062 vorgeschlagen, der aus Epichlorohydrin-Kautschuk bestehenden Deckschicht eine organische Phosphonium-Verbindung als Haftvermittler beizumischen. Unter Verwendung des vorgenannten Haftvermittlers wird die Deckschicht direkt mit der Sperrschicht ohne den üblicherweise eingesetzten Klebstoff kraftschlüssig zu einem zweilagigen Kraftstoffschlauch verbunden.

Die EP 759 354 A1, die US 6,261,657 B1 und die DE 4 017 273 A1 offenbare Schichtkörper, insbesondere Schläuche.

Die Aufgabe der Erfindung ist es, eine kostengünstige Leitung, insbesondere für Tankeinfüllsysteme, mit einer Sperrschicht und einer Deckschicht zu schaffen, die großen mechanischen Belastungen ausgesetzt werden kann, und gleichzeitig eine gute Sperrwirkung gegen das in der Leitung geführte Medium, insbesondere gegen methanolhaltigen Kraftstoff, aufweist.

Erfindungsgemäß wird diese Aufgabe durch eine Leitung gemäß Anspruch 1 gelöst.

Bevorzugte Ausgestaltungen sind in Anspruch 2 bis 6 definiert.

Es hat sich als besonders vorteilhaft erwiesen, wenn der Haftvermittler 80 % bis weniger als 100 % Tetra-Butyl-Phosphonium-Benzotriazolat umfasst. Eine derartige Phosphoniumverbindung führt zu einem besonders guten Adhäsionsverhalten zwischen der Sperrschicht und der Zwischenschicht.

In einer bevorzugten Ausgestaltung ist die Sperrschicht aus wenigstens einem Fluor-Thermoplast, insbesondere PVDF und/oder THV hergestellt. Die vorgenannten Werkstoffe weisen eine hervorragende Sperrwirkung gegen leicht verflüchtigende Kraftstoffe auf und eignen sich deshalb besonders gut zur Herstellung der Sperrschicht.

In einer anderen bevorzugten Ausgestaltung ist die Sperrschicht aus wenigstens einem Polyamid, insbesondere PA12, hergestellt. Die Verwendung eines Materials auf Polyamidbasis zur Herstellung der Sperrschicht erlaubt die Fertigung besonders kostengünstiger Leitungen.

Des weiteren wird erfindungsgemäß die Deckschicht aus Chloro-Polyethylen hergestellt. Dieses Material weist besonders gute Schutzeigenschaften auf, so dass eine mit einer derartigen Deckschicht hergestellte Leitung besonders beständig gegen Umwelteinflüsse und Wärme ist.

In einer weiteren Ausgestaltung ist die Leitung dreischichtig. Es hat sich gezeigt, dass eine dreischichtige Leitung bestehend aus der Sperrschicht, der Zwischenschicht und der Deckschicht, den strengen gesetzlichen Anforderungen an die erlaubte Permeationsrate und die erforderliche Festigkeit genügt.

Wenn in der Leitung ein Medium unter höheren Drücken geführt werden soll, kann in bevorzugter Weise eine Verstärkungsschicht, insbesondere zwischen der Deckschicht und der Zwischenschicht, vorgesehen sein. Diese Verstärkungsschicht wirkt als Druckträger und erweitert hinsichtlich des Druckbereichs die Einsatzmöglichkeiten der erfindungsgemäßen Leitung.

Die Erfindung wird im Folgenden anhand schematischer Zeitungen beispielsweise und mit weiteren Einzelheiten erläutert. Dabei zeigen
- Fig. 1: eine Seitenansicht eines dreischichtigen Ausführungsbeispiels der erfindungsgemäßen Leitung und
- Fig. 2: eine Seitenansicht eines vierschichtigen Ausführungsbeispiels der erfindungsgemäßen Leitung.

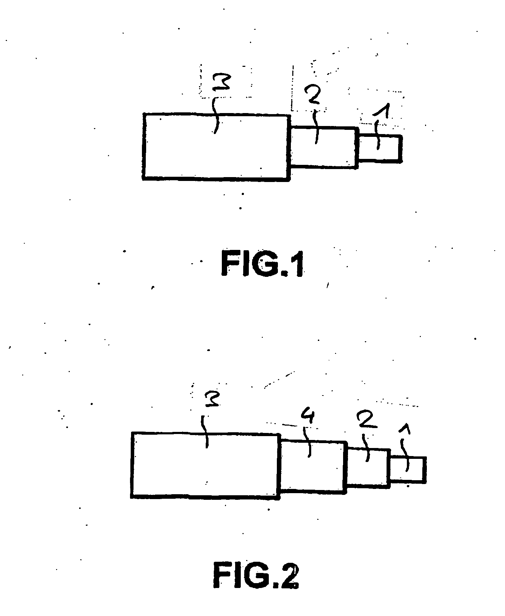

In Fig. 1 ist in seitlicher Ansicht ein Ausführungsbeispiel der erfindungsgemäßen Leitung dargestellt, wie sie hauptsächlich als Kraftstoffleitung in Tankeinfüllsystemen zum Einsatz kommt. Zum besseren Verständnis der Anordnung der einzelnen Schichten sind die die inneren Schichten abdeckenden äußeren Schichten nur teilweise gezeigt.

Der Inliner der Leitung ist als Sperrschicht 1 ausgebildet, die im vorliegenden Ausführungsbeispiel im unmittelbaren Kontakt mit dem in der Leitung geführten Kraftstoff ist. Diese Sperrschicht ist aus einem Fluor-Thermoplast hergestellt. Als Fluor-Thermoplast eignet sich besonders Tetrafluorethylen-Hexafluorpropylen-Vinylidenfluorid (THV) oder Polyvinylidenfluorid (PVDF). Diese Materialien besitzen besonders gute permeationshemmende Eigenschaften. Alternativ kann die Sperrschicht 1 aus wenigstens einem Polyamid, insbesondere aus PA12 hergestellt sein, was eine kostengünstige Alternative zu der Verwendung des Fluor-Thermoplasten darstellt.

Die Sperrschicht 1 ist, wie in Fig. 1 zu sehen, von einer Zwischenschicht 2 form- und kraftschlüssig umgeben. Die gute Haftung der Zwischenschicht 2 auf der Sperrschicht 1 wird durch Beimischung eines Haftvermittlers aus einer Phosphoniumverbindung erzielt. In dem vorliegenden Ausführungsbeispiel umfasst der Haftvermittler 80 % bis weniger als 100 % Tetra-Butyl-Phosphonium-Benzotriazolat. Die Verwendung eines solchen Haftvermittlers führt zu einer besonders festen Verbindung zwischen der Zwischenschicht 2 und der Sperrschicht 1. Die vorgenannte Phosphoniumverbindung wird in einer Menge von 0,5 bis etwa 5 Gew.-% beigemischt, je nach dem welche Festigkeitseigenschaften oder welche Vulkanisierungsgeschwindigkeit gewünscht sind. Die Zwischenschicht 2 enthält darüber hinaus 0,1 bis etwa 5 Gew.-% Vulkanisationsmittel.

Die Außenschicht der in Fig. 1 gezeigten Leitung bildet eine Deckschicht 3, die aus Chloro-Polyethylen hergestellt ist. Die Deckschicht 3 ist ebenfalls form- und kraftschlüssig, mit der Zwischenschicht 2 verbunden. Die Verbindung zwischen Deckschicht 3 und Zwischenschicht 2 ist hinsichtlich der Haftwirkung unproblematisch.

Die in Fig. 1 gezeigte Leitung wird durch Coextrudieren hergestellt. Andere Herstellungsverfahren sind ebenfalls denkbar.

Für Anwendungen, bei denen Kraftstoff unter erhöhtem Druck transportiert wird, ist, wie in Fig. 2 gezeigt, zwischen der Deckschicht 3 und der Zwischenschicht 2 eine Verstärkungsschicht 4 als Druckträger vorgesehen. Diese Verstärkungsschicht 4 kann als Gewebeschicht ausgebildet sein. Weitere Schichten können je nach Anwendung der Leitung, beispielsweise als spezieller Wärmeschutz, vorgesehen sein.

Die vorstehend beschriebene Leitung eignet sich insbesondere als Kraftstoffschlauch in Tankeinfüllsystemen. Andere Einsatzmöglichkeiten dieser Leitung in Bereichen, in denen leicht verflüchtigende Medien durch Leitungen transportiert werden müssen, sind ebenfalls denkbar.

## Patentansprüche

1. Leitung insbesondere für Tankeinfüllsysteme, mit einer Sperrschicht (1) und einer Deckschicht (3) aus Chloro-Polyethylen, wobei zwischen der Sperrschicht (1) und der Deckschicht (3) eine Zwischenschicht (2) bestehend aus Nitril-Butadien-Kautschuk vorgesehen ist, der ein Haftvermittler aus einer Phosphoniumverbindung und ein Vulkanisationsmittel beigemischt ist, wobei der Haftvermittler in 0,5 bis 5 Gew.-%, und das Vulkanisationsmittel in 0,1 bis 5 Gew.-% in der Zwischenschicht (2) vorhanden ist.

2. Leitung nach Anspruch 1, **dadurch gekennzeichnet, dass** der Haftvermittler 80% bis weniger als 100% Tetra-Butyl-Phosphonium-Benzotriazolat umfasst.

3. Leitung nach Anspruch 1 oder 2, **dadurch gekennzeichnet, dass** die Sperrschicht (1) aus wenigstens einem Fluor-Thermoplast, insbesondere PVDF und/oder THV, hergestellt ist.

4. Leitung nach wenigstens einem der Ansprüche 1 bis 3, **dadurch gekennzeichnet, dass** die Sperrschicht (1) aus wenigstens einem Polyamid, insbesondere PA12, hergestellt ist.

5. Leitung nach wenigstens einem der Ansprüche 1 bis 4, **dadurch gekennzeichnet, dass** die Leitung dreischichtig ist.

6. Leitung nach wenigstens einem der Ansprüche 1 bis 4, **dadurch gekennzeichnet, dass** eine Verstärkungsschicht (4), insbesondere zwischen der Deckschicht (3) und der Zwischenschicht (2), vorgesehen ist.

## Claims

1. A line, in particular for fuel tank filler systems, comprising a blocking layer (1) and a cover layer (3) consisting of chloropolyethylene, wherein the blocking layer (1) and the cover layer (3) have provided between them an intermediate layer (2) made of nitrile butadiene rubber and having admixed thereto an adhesion promoter, which is made of a phosphonium compound, and a vulcanizing agent, wherein said intermediate layer (2) contains 0.5 to 5 % by weight of the adhesion promoter and 0.1 to 5 % by weight of the vulcanizing agent.

2. A line according to claim 1, **characterized in that** the adhesion promoter comprises 80% to less than 100% of tetrabutyl phosphonium benzotriazolate.

3. A line according to claim 1 or 2, **characterized in that** the blocking layer (1) is produced from at least one fluorothermoplast, in particular from PVDF and/or THV.

4. A line according to at least one of the claims 1 to 3, **characterized in that** the blocking layer (1) is produced from at least one polyamide, in particular from PA12.

5. A line according to at least one of the claims 1 to 4, **characterized in that** the line comprises three layers.

6. A line according to at least one of the claims 1 to 4, **characterized in that** a reinforcement layer (4) is provided, said reinforcement layer (4) being provided especially between the cover layer (3) and the intermediate layer (2).

## Revendications

1. Conduite, en particulier pour des systèmes de remplissage de citernes, avec une couche de barrage (1) et une couche de recouvrement (3) en polyéthylène chloré, étant précisé qu'il est prévu entre la couche de barrage (1) et la couche de recouvrement (3) une couche intermédiaire (2) qui est composée de caoutchouc nitrile butadiène et à laquelle sont ajoutés un agent d'adhérence constitué par un composé phosphonium et un agent de vulcanisation, l'agent d'adhérence étant présent à raison de 0,5 à 5 % en poids, et l'agent de vulcanisation à raison de 0,1 à 5 % en poids dans la couche intermédiaire (2).

2. Conduite selon la revendication 1, **caractérisée en ce que** l'agent d'adhérence contient de 80 % à moins de 100 % de benzotriazolate de tétrabutylphosphonium.

3. Conduite selon la revendication 1 ou 2, **caractérisée en ce que** la couche de barrage (1) est fabriquée à partir d'au moins un thermoplastique fluoré, en particulier PVDF et/ou THV.

4. Conduite selon l'une au moins des revendications 1 à 3, **caractérisée en ce que** la couche de barrage (1) est fabriquée à partir d'au moins un polyamide, en particulier PA12.

5. Conduite selon l'une au moins des revendications 1 à 4, **caractérisée en ce qu'**elle a trois couches.

6. Conduite selon l'une au moins des revendications 1 à 4, **caractérisée en ce qu'**il est prévu une couche de renforcement (4), en particulier entre la couche de recouvrement (3) et la couche intermédiaire (2).
